# EUROPEAN PATENT APPLICATION

(11) **EP 4 822 163 A1**
(43) Date of publication of application: **14.10.2026**
(21) Application number: 25169504.5
(22) Date of filing: 09.04.2025
(51) Int. Cl.: F02D 19/06, F02D 19/08, F02D 41/00, F02D 41/30, G01M 15/05

(54) **METHOD FOR MANAGING THE AIR CONTENT WITHIN AN INJECTION RAIL IN A DUAL MODE INTERNAL COMBUSTION ENGINE**

(71) Applicant: Horse Powertrain Solutions, S.L.U., 28108 Alcobendas, Madrid (ES)
(72) Inventor: BERQUEZ, Julien-Michel-Roger, 135500 TITU (RO); ROMAN-IONITA, Filip, 135500 TITU (RO); SION, Julien-Xavier-Maxime, 115400 Mioveni (RO)
(74) Representative: Elzaburu S.L.P.

(57) **Abstract**

Method for managing the air content within an injection rail (100) in a dual mode internal combustion engine configured to operate according to first and second modes of operation, wherein: in the first mode of operation, a first fuel is injected into a combustion chamber (200) while a certain amount of air is introduced into the combustion chamber (200) by an air intake pipe (300); in the second mode of operation, the injection rail (100) injects a second fuel into the air intake pipe (300); wherein the method comprises: determining the mass of air introduced into the injection rail (100) during the first mode of operation, and; upon detection of an instruction to change from the first to second mode of operation, activating a purge mode of operation in which air is purged out from the injection rail (100).

## Description

### Technical field

The present invention is directed to a method for managing the air content within an injection rail in a dual mode internal combustion engine. More specifically, the method of the present invention allows for managing the air content within a LPG injection rail in a dual mode (dual fuel) internal combustion engine which is configured to burn a first or primary fuel (e.g. gasoline) and a second or secondary fuel (e.g. LPG fuel).

The present invention allows for ensuring fuel is completely burnt at the combustion chamber of the engine at an stoichiometric ratio, thereby avoiding unburnt fuel being disposed off and meeting environmental criteria and/or restrictions.

The method of the present invention further allows reducing the risk of the engine being stalled due to a lack of fuel being injected into the combustion chamber while in the second fuel mode (namely, the LPG mode).

This invention is preferably applicable in the field of design, manufacturing and industrial and/or private usage of internal combustion engines and, more particularly, in dual mode (e.g. gasoline and LPG) internal combustion engines.

### Background of the invention

Liquified Petroleum Gas (LPG) is increasingly being used as an alternative fuel in internal combustion engines as its use leads to a reduction in CO₂ emissions, as well as a reduction in CO emissions and NOₓ emissions.

In some applications, dual mode (or dual fuel) internal combustion engines are used so as to achieve a compromise between volumetric energy content and reduction of pollutant emissions. Dual mode internal combustion engines may allow the driver to manually choose and/or switch between pure gasoline mode and pure LPG mode, and are often a good choice for those wanting to have an environmentally friendly vehicle without the risk of getting stuck with their vehicle because of the lack of LPG stations available in certain areas.

There are certain environmental criteria and/or emission control standards (such as Euro6d, Euro7, LEV8, China7, etc.) that require that internal combustion engines must burn the fuel as close as possible to the theoretical stoichiometric ratio, in order to maximize the conversion efficiency of the 3-way catalyst, so to efficiently oxidize all hydrocarbon compounds (HC) and carbon monoxide (CO), and reduce NOx emissions.

One success condition to burn at stoichiometric ratio is to inject the correct amount of fuel according to the fresh air mass supplied to the engine, both in stabilized and transient conditions. For this purpose, the LPG injectors are usually designed as a trade-off between injector dynamical controllability and back-flow resistance.

The injector back-flow phenomenon is described as an air mass migration from the intake manifold (intake pipe) towards LPG injectors common rail while boost pressure is higher than the LPG rail pressure added to the injector static pressure (injector spring force per injector tip functional surface ratio): ${P}_{boost} > {P}_{rail} + {P}_{inj_st}$

Depending on the LPG rail volume and pressure difference, at the end of the back-flow phenomenon, we have an LPG rail partially filled with air and partially filled with LPG fuel (mainly LPG gaseous fuel, although some LPG fuel may be present in liquid state within the LPG rail).

The research studies demonstrates that the air does not mix with the gaseous fuel, so a heterogenous gas mixture is present in the LPG rail at the end, fresh air being positioned above gaseous LPG, as air is less dense than gaseous LPG.

The LPG injectors supply ports are positioned in the upper part of the LPG rail (LPG injectors common rail), so when switching to the LPG mode, the air stored within the LPG rail during back-flow event will be injected first, when the injectors will be commanded.

Turning back to the aim of achieving the condition to burn the fuel as close as possible to the stoichiometric ratio, and bearing in mind the air back-flow phenomenon, two possible approaches can be followed in order to design the LPG injectors according to a trade-off between injector dynamical controllability and back-flow resistance: either using high stiffness LPG injector springs or using low stiffness LPG injector springs. Each of the two approaches has its own advantages and disadvantages.

The usage of high stiffness LPG injector springs has the advantage that it can withstand a high-pressure level of the air within the intake manifold or intake pipe, thereby presenting a high back-flow rate resistance, reducing the risk of air back-flow into the LPG rail and/or reducing the amount of back-flow air introduced into the LPG rail.

However, the usage of high stiffness LPG injector springs has the disadvantage that these springs are less controllable, this leading to a risk of stoichiometry criteria non-compliance. There is also the disadvantage that these high stiffness LPG injector springs involve a higher electric current needed to control them, this leading to an increase in CO₂ emissions at the end.

On the other hand, the usage of low stiffness LPG injector springs has the advantages of involving a lower electric current needed to their control and a better controllability.

However, the usage of low stiffness LPG injector springs has the disadvantage of a low resistance to the air back-flow phenomenon, this leading to a risk of stoichiometric criteria non-compliance (due to air being injected into the combustion chamber instead of LPG fuel).

The usage of low stiffness LPG injector springs has a further disadvantage of requiring supplementary pressure build-up within the LPG rail in order to avoid the air back-flow phenomenon. However, by doing this, the injector controllability decreases (it is somehow equivalent to adding stiffness to the injector springs).

Since the usage of high stiffness LPG injector springs affects the CO₂ level more than the usage of low stiffness LPG injector springs, and provided that the usage of high stiffness LPG injector springs comes with a risk of non-compliance of stoichiometric ratio which cannot be covered by other system functions, it has been considered as a preferred solution the usage of low stiffness LPG injector springs.

However, as already said, the usage of low stiffness LPG injector springs has some disadvantages that must be addressed.

### Summary of the invention

With the aim of providing a solution to the abovementioned problems, the present invention refers to a method for managing the air content within an injection rail in a dual mode internal combustion engine.

According to the present invention, the method for managing the air content within an injection rail in a dual mode internal combustion engine is configured to be implemented upon an internal combustion engine which in turn is configured to operate according to a first mode of operation and according to a second mode of operation, wherein:
- in the first mode of operation, a first fuel is injected into at least one combustion chamber of the internal combustion engine while a certain amount of air is introduced into the at least one combustion chamber by means of an air intake pipe, and;
- in the second mode of operation, the injection rail is configured to inject a second fuel into the air intake pipe.

In a novel manner, the method for managing the air content within an injection rail in a dual mode internal combustion engine comprises:
- determining the mass of air introduced into the injection rail during the first mode of operation of the internal combustion engine due to a back-flow phenomenon, and;
- upon detection of an instruction (e.g. an instruction given by the driver of the vehicle) to change from the first mode of operation to the second mode of operation, activating a transitory purge mode of operation in which air is purged out from the injection rail while the first fuel is still being injected into the at least one combustion chamber.

Thanks to the method described above, an engine stall is prevented when initiating the second mode of operation, due to the previous transient purge mode of operation in which air is purged out from the injection rail, and due to the first fuel being still injected into the combustion chamber, thus compensating the reduced amount of second fuel which is heterogeneously mixed with the back-flow air.

According to a preferred embodiment of the method, the mass of air introduced into the injection rail due to the back-flow phenomenon is calculated as follows:
- upon detection of an activation of the engine's first mode of operation, register a pressure value (P₁) and temperature value (T₁) within the injection rail and set a volumetric content, X_{C}, of the second fuel into the injection rail;
- iteratively register the pressure value and the temperature value within the injection rail at subsequent instants in time, "i", and calculate the variation, Δ*X,* in the volumetric content, X_{C}, of the second fuel into the injection rail, by means of the following formula: $Δ {X}_{i + 1} = \frac{{P}_{i} ∗ {T}_{i + 1}}{{P}_{i + 1} ∗ {T}_{i}}$ wherein the volumetric content, X_{C}, of the second fuel into the injection rail (100) at each instant "i" in time is calculated as: ${X}_{C \left(i+1\right)} = Δ {X}_{i + 1} ∗ {X}_{C \left(i\right)}$
- calculate the mass of air, *Aᵢ*, present into the injection rail at each instant "i" in time, corresponding to a volumetric content of air in the injection rail equal to 1 *- X*_{*C*(*i*)}, as: ${A}_{i} = \frac{\left(1-{X}_{C \left(i\right)}\right) ∗ {P}_{i} ∗ {V}_{rail} ∗ R}{{T}_{i}}$ where *Vᵣₐᵢₗ* is the volume of the injection rail, and where R is the ideal gas constant equal to R = 8,314 J/mol.K.

Furthermore, according to a preferred embodiment of the invention, the method comprises, upon detection of an activation of the engine's first mode of operation, set a volumetric content, X_{C}, of the second fuel into the injection rail equal to 1 (X_{C1}=1), as an assumption that the injection rail is completely filled with the second fuel. This is specifically the case after a long operation of the engine in the second mode of operation, when the injection rail is assumed to be completely free of back-flow air (i.e. completely filled with second fuel).

In a preferred embodiment of the method, within the purge mode of operation, the air is purged out from the injection rail sequentially at subsequent purge injections, wherein the mass of air purged out from the injection rail at each purge injection is equal to: $\left(1-\frac{1}{α}\right) ∗ {P}_{g} ∗ \frac{{ρ}_{air}}{{ρ}_{2 FUEL}}$ where:
*ρ*_{2*FUEL*} is the density of the second fuel;
*ρₐᵢᵣ* is the density of the air;
*P_{g}* is the mass of the second fuel that is to be injected into the air intake pipe at each injection during stationary second mode of operation, and;
*α* is a coefficient which depends both on the air mass ("A") present inside the injection rail at any given time, and on the pressure value inside the air intake pipe.

The air mass ("A") present inside the injection rail after each purge injection, "j", may be calculated as: ${A}_{j + 1} = {A}_{j} - \left(1-\frac{1}{{α}_{j}}\right) ∗ {P}_{g} ∗ \frac{{ρ}_{air}}{{ρ}_{2 FUEL}}$ where *"αⱼ"* is the value for "*α*" used prior to the previous purge injection "j".

According to a preferred embodiment of the method, within the purge mode of operation, the amount of first fuel being injected into the combustion chamber is the result of subtracting to the theoretical amount of first fuel that should be injected during the first mode of operation, the second fuel mass injected into the air intake pipe together with the purge air within each purge injection, wherein the mass of the second fuel injected into the air intake pipe within each purge injection is calculated as: ${P}_{g} ∗ \left(\frac{1}{α}\right)$

The volumetric content, X_{C}, of second fuel present within the injection rail may be updated after each purge injection "j", such that: ${X}_{C \left(j+1\right)} = \frac{{M}_{t} - {A}_{j + 1} ∗ \frac{{ρ}_{2 FUEL}}{{ρ}_{air}}}{{M}_{t}}$ where *Mₜ* stands for the total mass of second fuel within the injection rail if the injection rail was completely filled with second fuel at the current pressure and temperature conditions.

According to a preferred embodiment of the method, the purging of air from the inside of the injection rail terminates once the volumetric content, X_{C}, of second fuel inside the injection rail reaches a certain minimum value (a value which is considered to be the minimum volumetric content of second fuel that should be present within the injection pipe to ensure a reliable start of the second mode of operation).

According to a preferred embodiment of the method of the present invention, the second fuel is liquified petroleum gas (LPG) and the injection rail is an LPG injection rail.

The first fuel may be gasoline.

### Brief description of the drawings

As a means for better understanding at least one embodiment of the present invention, the following set of drawings is introduced by way of schematic illustration and in a non-limitative manner.
Figure 1: Shows a schematic view of a dual mode internal combustion engine, configured to manage the air content within the LPG injection rail according to the method of the present invention.
Figure 2: Shows a schematic detail view of a cylinder of the internal combustion engine of Figure 1, in which a first fuel (e.g. gasoline) is directly injected into the combustion chamber and a LPG injector is configured to inject LPG into the intake air pipe or manifold.

### Detailed description

The present invention, as already introduced, refers to a method for managing the air content within an injection rail (100) in a dual mode internal combustion engine.

In a preferred embodiment of the invention, the method is aimed at managing the air content within a LPG injection rail (100) in a dual mode internal combustion engine, wherein the first mode refers to a first fuel mode (e.g. gasoline mode) and the second mode refers to LPG mode.

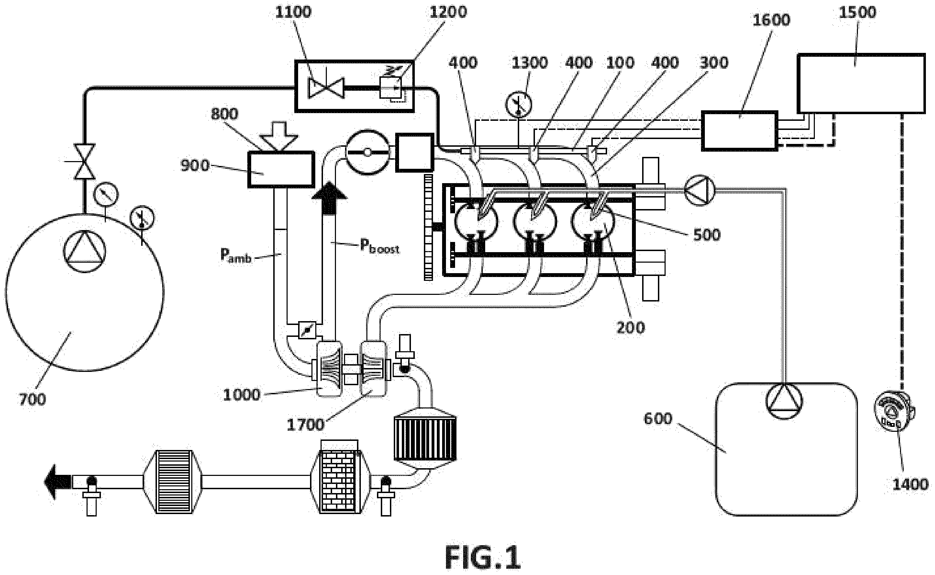

The LPG internal combustion engine shown in Figure 1 is a dual mode internal combustion engine in which a first fuel (e.g. gasoline), coming from a first fuel tank (600), is directly injected into the combustion chamber (200) while in the first mode of operation of the internal combustion engine, and a second fuel (namely LPG fuel), coming from a second fuel tank (700), is injected into the intake pipe (300) while in the second mode of operation of the internal combustion engine.

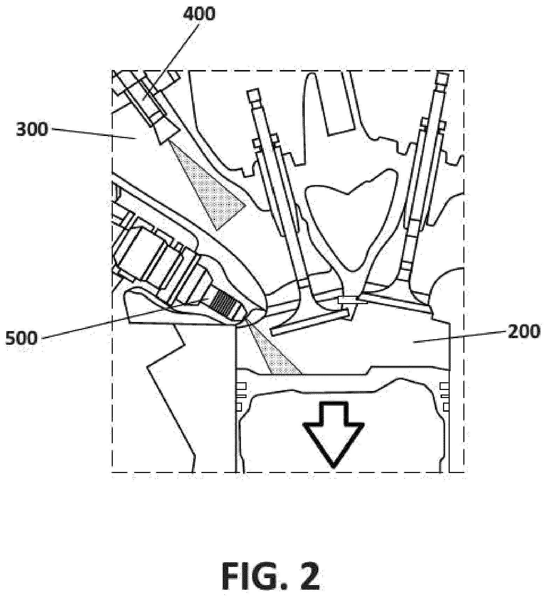

Figure 2 shows an LPG injector (400) configured to inject the second fuel (LPG fuel) into the intake pipe (300) and a first fuel injector (500) configured to inject the first fuel into the combustion chamber (200).

The intake pipe (300) is configured to inject the intake air (coming from the air's intake (800) and passing through the intake filter (900)), into the combustion chamber (200). The intake air's pressure must be boosted (by means of an air pressure pump (1000)) from an ambient pressure, P_{amb}, up to a built-up pressure, P_{boost}, prior to its injection into the combustion chamber (200).

The air pressure pump (1000) may be powered by a turbine (1700) which is in turn moved by the exhaust gas stream coming from the combustion chambers (200) of the engine's cylinders. The exhaust gas stream then flows through a purification system (comprising at least one catalyser) prior to its output to the ambient air.

Eventually, the intake air's built-up pressure, P_{boost}, can reach a value higher than the sum of the pressure inside the LPG injection rail (100), Pᵣₐᵢₗ, plus the static pressure of the LPG injectors (400) (injector spring force per injector tip functional surface ratio), P_{inj_st}, as indicated by the following condition: ${P}_{boost} > {P}_{rail} + {P}_{inj_st}$ (1)

The latter situation may lead to the air flowing from the intake pipe (300) into the LPG injection rail (100) through the LPG injectors (400). This phenomenon is known as "back-flow".

The back-flow phenomenon mainly takes place while the internal combustion engine is functioning in first fuel mode (e.g. in gasoline mode). In this mode of operation of the internal combustion engine, the shut-off valve (1100) of the LPG is closed, and the vaporizer pressure regulation valve (1200) to isolate the LPG injection rail (100) is also closed. Therefore, the LPG system is disconnected and the LPG injection rail (100) is not pressurized.

The method of the present invention is aimed at purging the air content present within the LPG injection rail (100), due to the back-flow phenomenon.

For this purpose, the method of the present invention is configured to obtain the back-flow air content present within the LPG injection rail (100).

When the internal combustion engine has just turned from LPG mode of operation to the first fuel mode (the gasoline mode), it is assumed that the LPG injection rail (100) is completely filled with LPG fuel and, thus, the air content within the LPG injection rail is equal to zero.

In this situation, a volumetric content of LPG fuel, X_{C}, corresponding to X_{C1}=1 is stored within a non-volatile memory, such as an EEPROM memory, thereby making the stored value, X_{M(1)}=1.

Furthermore, when the internal combustion engine has just turned from LPG mode of operation to the first fuel mode (the gasoline mode), the LPG injection rail (100) pressure (P₁) and temperature (T₁) values are memorized.

From this point on, when the internal combustion engine is in the first fuel mode of operation (the gasoline mode), the LPG volumetric content within the LPG injection rail (100) is continuously monitored by repeatedly reading the pressure (Pᵢ) and the temperature (Tᵢ) values, at different instants in time, "i", from corresponding pressure and temperature sensors (1300) at the LPG injection rail (100).

Thus, at time instant "i=2", the variation of the LPG volumetric content with respect to the LPG volumetric content at time instant "i=1" is given by: $Δ X = \frac{{P}_{1} ∗ {T}_{2}}{{P}_{2} ∗ {T}_{1}}$ (2)

Thus, at time instant "i=2", the LPG volumetric content, X_{C}, within the LPG injection rail (100) is given by: ${X}_{C 2} = Δ X ∗ {X}_{C 1}$ (3)

Then, the new calculated volumetric content of gas, X_{C2}, is stored within the EEPROM memory, thereby making the stored value, X_{M(2)}=*X*_{*C*2}

These calculations are continuously made during a plurality of instants in time, "i", in order to monitor the LPG volumetric content within the LPG injection rail (100), during the first fuel mode of operation of the internal combustion engine, so that: $Δ {X}_{i + 1} = \frac{{P}_{i} ∗ {T}_{i + 1}}{{P}_{i + 1} ∗ {T}_{i}}$ (4) and ${X}_{C \left(i+1\right)} = Δ {X}_{i + 1} ∗ {X}_{C \left(i\right)}$ (5)

The calculated volumetric content of gas, X_{C}, is stored within the EEPROM memory after each calculation of X_{C}, thereby making the stored value, *X*_{*M*(*i*+1)}=*X*_{*C*(*i*+1)}

For each instant "i" in time, and given a volumetric content, *X*_{*C*(*i*)}, of LPG fuel within the LPG injection rail (100), the volumetric content of back-flow air is equal to 1*-X*_{*C*(*i*)}

For a given volumetric content of air equal to 1*-X*_{*C*(*i*)}*,* within the LPG injection rail (100), the air mass ("A") is calculated (based on the ideal gas law *p*V=n*R*T*) by: ${A}_{i} = \frac{\left(1-{X}_{C \left(i\right)}\right) ∗ {P}_{i} ∗ {V}_{rail} ∗ R}{{T}_{i}}$ (6) where *Vᵣₐᵢₗ* is the volume of the LPG injection rail (100), which is considered known and constant, and where R is the ideal gas constant equal to R = 8,314 J/mol.K

Once the air content within the LPG injection rail (100) due to the back-flow phenomenon is known at any given time during the first fuel mode of operation, the method of the present invention is ready to start the purging of air from the LPG injection rail (100).

Preferably, the purging of the air from the inside of the LPG injection rail (100) starts once the vehicle user has instructed, by means of a corresponding button (1400), the beginning of the LPG mode of operation of the internal combustion engine. When the user pushes the button (1400) for activating the LPG mode of operation, a signal is sent to the vehicle's central control unit (1500), which in turn commands the LPG operation control unit (1600) to start the LPG mode of operation of the internal combustion engine.

The "full" LPG mode of operation (i.e. with no first fuel being injected into the combustion chamber (200)) only starts after the purging of air has finished. Thus, during the purging of air, a "hybrid" (and transitory) mode of operation takes place, in which the first fuel (e.g. gasoline) is still being injected into the combustion chamber (200).

Considering that there would be no back-flow air present within the LPG injection rail (100), the amount of LPG fuel to be injected into the intake pipe (300) at each injection through each LPG injector (400) during the transitory "hybrid" mode of operation (purging of air) would be "P_{g}". Thus, P_{g}, stands for the mass of LPG fuel to be injected into the intake pipe (300) at each purge injection, during functioning of the internal combustion engine within the transitory "hybrid" mode of operation (i.e. during purge mode of operation). The value of P_{g} is set in function of engine speed and load/torque demanded to the internal combustion engine, and its setting is hardware limited anywhere between the minimum mass of LPG that can be accurately delivered by the secondary fuel injectors (400) at each injection, and the maximum mass of LPG over which the first fuel injectors (500) are not capable anymore to deliver the remaining fuel accurately at each injection.

Turning back to the situation in which back-flow air is present within the LPG injection rail (100), each purge injection from the LPG injection rail (100) into the intake pipe (300) (through each LPG injector (400)) contains a certain amount of air (to be purged) and a certain amount of LPG fuel.

An injection volumetric coefficient, "α", is set in function of the air mass ("A") present inside the LPG injection rail (100) at any given time, and the pressure value inside the intake pipe (300). $\frac{1}{α}$ stands for the volumetric ratio of LPG fuel to be injected within each purge injection, and 1 - $\frac{1}{α}$ stands for the volumetric ratio of air to be injected within each purge injection.

Thus, the air mass injected into the intake pipe (300) within each purge injection is given by: $\left(1-\frac{1}{α}\right) ∗ {P}_{g} ∗ \frac{{ρ}_{air}}{{ρ}_{LPG}}$ (7) where "*ρ_{LPG}*" stands for the LPG fuel density and "*ρₐᵢᵣ*" stands for the air density.

The LPG mass injected into the intake pipe (300) within each purge injection is then given by: ${P}_{g} ∗ \left(\frac{1}{α}\right)$ (8)

After each purge injection, "j", the remaining air mass "Aⱼ₊₁" present within the LPG injection rail (100) is recalculated by subtracting the air mass injected into the intake pipe (300) within the previous purge injection, such that: ${A}_{j + 1} = {A}_{j} - \left(1-\frac{1}{{α}_{j}}\right) ∗ {P}_{g} ∗ \frac{{ρ}_{air}}{{ρ}_{LPG}}$ (9) where "*αⱼ*" is the value for "*α*" used prior to the previous purge injection "j".

When the purging of air from the inside of the LPG injection rail (100) has not yet started (j=0), the air mass "*A*_{*j*=0}" is equal to the last value "*Aᵢ*" calculated by equation (6).

As already introduced, during the purging of air from the inside of the LPG injection rail (100), the first fuel (e.g. gasoline) is still injected into the combustion chamber (200).

At any given time during the purging of the LPG injection rail (100), the amount of first fuel being injected into the combustion chamber (200) is determined so as to ensure that stoichiometric burn conditions are met. Thus, during the purging of air from the LPG injection rail (100), the amount of first fuel being injected into the combustion chamber (200) is the result of subtracting the injected LPG mass ( ${P}_{g} ∗ \left(\frac{1}{α}\right)$) to the theoretical amount of first fuel that should be injected during the pure first fuel operation mode (i.e. during the "full" first fuel mode of operation), considering the stoichiometric ratio conversion between the LPG fuel and the first fuel.

During the purging of air from the inside of the LPG injection rail (100), the volumetric content of LPG fuel present within the LPG injection rail (100) is updated after each purge injection "j", such that: ${X}_{C \left(j+1\right)} = \frac{{M}_{t} - {A}_{j + 1} ∗ \frac{{ρ}_{LPG}}{{ρ}_{air}}}{{M}_{t}}$ (10) where *Mₜ* stands for the total mass of LPG fuel within the LPG injection rail (100) if the LPG injection rail (100) was completely filled with LPG fuel at the current P and T conditions read from the pressure and temperature sensor (1300).

The purging of air from the inside of the LPG injection rail (100) terminates once the volumetric content, X_{C}, of LPG fuel inside the LPG injection rail (100) reaches a certain minimum value.

## Claims

1. Method for managing the air content within an injection rail (100) in a dual mode internal combustion engine, wherein the internal combustion engine is configured to operate according to a first mode of operation and according to a second mode of operation, wherein:
- in the first mode of operation, a first fuel is injected into at least one combustion chamber (200) of the internal combustion engine while a certain amount of air is introduced into the at least one combustion chamber (200) by means of an air intake pipe (300);
- in the second mode of operation, the injection rail (100) is configured to inject a second fuel into the air intake pipe (300);
wherein the method is **characterized in that** it comprises:
- determining the mass of air introduced into the injection rail (100) during the first mode of operation of the internal combustion engine due to a back-flow phenomenon;
- upon detection of an instruction to change from the first mode of operation to the second mode of operation, activating a transitory purge mode of operation in which air is purged out from the injection rail (100) while the first fuel is still being injected into the at least one combustion chamber (100).

2. Method for managing the air content within an injection rail (100) in a dual mode internal combustion engine according to claim 1, **characterized in that** the mass of air introduced into the injection rail (100) due to the back-flow phenomenon is calculated as follows:
- upon detection of an activation of the engine's first mode of operation, register a pressure value (P₁) and temperature value (T₁) within the injection rail (100) and set a volumetric content, X_{C}, of the second fuel into the injection rail (100);
- iteratively register the pressure value and the temperature value within the injection rail (100) at subsequent instants in time, "i", and calculate the variation, Δ*X*, in the volumetric content, X_{C}, of the second fuel into the injection rail (100), by means of the following formula: $Δ {X}_{i + 1} = \frac{{P}_{i} ∗ {T}_{i + 1}}{{P}_{i + 1} ∗ {T}_{i}}$ wherein the volumetric content, X_{C}, of the second fuel into the injection rail (100) at each instant "i" in time is calculated as: ${X}_{C \left(i+1\right)} = Δ {X}_{i + 1} ∗ {X}_{C \left(i\right)}$
- calculate the mass of air, *Aᵢ*, present into the injection rail (100) at each instant "i" in time, corresponding to a volumetric content of air in the injection rail (100) equal to 1 - *X*_{*C*(*i*)}, as: ${A}_{i} = \frac{\left(1-{X}_{C \left(i\right)}\right) ∗ {P}_{i} ∗ {V}_{rail} ∗ R}{{T}_{i}}$ where *Vᵣₐᵢₗ* is the volume of the injection rail (100), and where R is the ideal gas constant equal to R = 8,314 J/mol.K.

3. Method for managing the air content within an injection rail (100) in a dual mode internal combustion engine according to claim 2, **characterized in that** it comprises, upon detection of the first lifetime activation of the engine's first mode of operation, set a volumetric content, X_{C}, of the second fuel into the injection rail (100) equal to 1 (X_{C1}=1), as an assumption that the injection rail (100) is completely filled with the second fuel.

4. Method for managing the air content within an injection rail (100) in a dual mode internal combustion engine according to any claim 1 to 3, **characterized in that**, within the purge mode of operation, the air is purged out from the injection rail (100) sequentially at subsequent purge injections, wherein the mass of air purged out from the injection rail (100) at each purge injection is equal to: $\left(1-\frac{1}{α}\right) ∗ {P}_{g} ∗ \frac{{ρ}_{air}}{{ρ}_{2 FUEL}}$ where:
*ρ*_{2*FUEL*} is the density of the second fuel;
*ρₐᵢᵣ* is the density of the air;
*P_{g}* is the mass of the second fuel that is to be injected into the air intake pipe (300) at each injection during purge mode of operation, and;
*α* is a coefficient which depends both on the air mass ("A") present inside the injection rail (100) at any given time, and on the pressure value inside the air intake pipe (300).

5. Method for managing the air content within an injection rail (100) in a dual mode internal combustion engine according to claim 4, **characterized in that** the air mass ("A") present inside the injection rail (100) after each purge injection, "j", is calculated as: ${A}_{j + 1} = {A}_{j} - \left(1-\frac{1}{{α}_{j}}\right) ∗ {P}_{g} ∗ \frac{{ρ}_{air}}{{ρ}_{2 FUEL}}$ where "*αⱼ*" is the value for "*α*" used prior to the previous purge injection "j".

6. Method for managing the air content within an injection rail (100) in a dual mode internal combustion engine according to claim 4 or 5, **characterized in that**, within the purge mode of operation, the amount of first fuel being injected into the combustion chamber (200) is the result of subtracting to the theoretical amount of first fuel that should be injected during the first mode of operation, the second fuel mass injected into the air intake pipe (300) together with the purge air within each purge injection, wherein the mass of the second fuel injected into the air intake pipe (300) within each purge injection is calculated as: ${P}_{g} ∗ \left(\frac{1}{α}\right)$

7. Method for managing the air content within an injection rail (100) in a dual mode internal combustion engine according to claim 5 or 6, **characterized in that** the volumetric content, X_{C}, of second fuel present within the injection rail (100) is updated after each purge injection "j", such that: ${X}_{C \left(j+1\right)} = \frac{{M}_{t} - {A}_{j + 1} ∗ \frac{{ρ}_{2 FUEL}}{{ρ}_{air}}}{{M}_{t}}$ where *Mₜ* stands for the total mass of second fuel within the injection rail (100) if the injection rail (100) was completely filled with second fuel at the current pressure and temperature conditions.

8. Method for managing the air content within an injection rail (100) in a dual mode internal combustion engine according to any preceding claim, **characterized in that** the purging of air from the inside of the injection rail (100) terminates once the volumetric content, X_{C}, of second fuel inside the injection rail (100) reaches a certain minimum value.

9. Method for managing the air content within an injection rail (100) in a dual mode internal combustion engine according to any preceding claim, **characterized in that** the second fuel is liquified petroleum gas (LPG) and the injection rail (100) is an LPG injection rail (100).

10. Method for managing the air content within an injection rail (100) in a dual mode internal combustion engine according to any preceding claim, **characterized in that** the first fuel is gasoline.
